(19) **Europäisches Patentamt**
**European Patent Office**
**Office européen des brevets**

(11) **EP 4 462 312 B1**

(12) **EUROPEAN PATENT SPECIFICATION**

(45) Date of publication and mention
of the grant of the patent:
**16.04.2025 Bulletin 2025/16**

(21) Application number: **23172163.0**

(22) Date of filing: **08.05.2023**

(51) International Patent Classification (IPC):
*G06N 3/08* (2023.01)     *G06N 3/088* (2023.01)
*G06N 3/094* (2023.01)    *G06N 3/045* (2023.01)

(52) Cooperative Patent Classification (CPC):
**G06N 3/08; G06N 3/045; G06N 3/048; G06N 3/082;
G06N 3/084; G06N 3/094**

(54) **A SYSTEM AND METHOD FOR CONCEPT REMOVAL**

SYSTEM UND VERFAHREN ZUR KONZEPTENTFERNUNG

SYSTÈME ET PROCÉDÉ DE RETRAIT DE CONCEPT

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**13.11.2024 Bulletin 2024/46**

(73) Proprietors:
 • **Lemon Inc.**
   **Grand Cayman, KY1-1205 (KY)**
 • **Beijing Youzhuju Network Technology Co. Ltd**
   **Beijing 101299 (CN)**

(72) Inventors:
 • **Klochkov, Yegor**
   **EC2Y 5EB London (GB)**
 • **Ton, Jean-Francois**
   **EC2Y 5EB London (GB)**
 • **Guo, Ruocheng**
   **EC2Y 5EB London (GB)**
 • **Liu, Yang**
   **90066 California (US)**
 • **Li, Hang**
   **100028 Beijing (CN)**

(74) Representative: **Dentons UK and Middle East LLP
One Fleet Place
London EC4M 7WS (GB)**

(56) References cited:
 • ABHINAV KUMAR ET AL: "Probing Classifiers
   are Unreliable for Concept Removal and
   Detection", ARXIV.ORG, CORNELL UNIVERSITY
   LIBRARY, 201 OLIN LIBRARY CORNELL
   UNIVERSITY ITHACA, NY 14853, 21 October 2022
   (2022-10-21), XP091349805
 • YI ZENG ET AL: "Adversarial Unlearning of
   Backdoors via Implicit Hypergradient",
   ARXIV.ORG, CORNELL UNIVERSITY LIBRARY,
   201 OLIN LIBRARY CORNELL UNIVERSITY
   ITHACA, NY 14853, 6 February 2022 (2022-02-06),
   XP091156616
 • JOSHUA STOCK ET AL: "Property Unlearning: A
   Defense Strategy Against Property Inference
   Attacks", ARXIV.ORG, CORNELL UNIVERSITY
   LIBRARY, 201 OLIN LIBRARY CORNELL
   UNIVERSITY ITHACA, NY 14853, 24 June 2022
   (2022-06-24), XP091250951

**Description**

The present application relates to a system and method of for removing a concept from a trained neural network for executing a classification task and software for carrying out the method.

Background

In representation learning, a neural network can learn to transform a complex input, such as an image, text or sound, into a representation vector. The representation vector is to be used by a classifier, such as a standard linear classifier, to solve various classification problems.

The representation vector can encode various human-understandable concepts that are embedded in the complex input. A "concept" can be a binary attribute of a class of instances. For example, binary attribute [1, 0] can respectively encode "Male" and "not Male" for the concept class "Male", [0] representing that "not Male" is an instance outside of the concept class "Male". In the same example, the binary attribute "Male" and "not Male" can also be associated with the concept class "Gender". In another example, binary attribute [1, 0] can respectively encode "Young" and "not Young" is associated with the concept the concept class "Young", [0] representing that "not Young" is an instance outside of the concept class "Young". In the same example, the binary attribute "Young" and "not Young" can also be associated with the concept class "Age".

In some instances, the representation vector can encode useful concepts, where the concepts are relevant to the classification task. For example, the representation vector could encode concept class "Stripes" when the neural network classifies whether an image comprises a "Zebra". For example, the representation vector could encode concept class "Clothing" when a neural network classifies whether an image comprises an "Apron". In another example, the representation vector could encode concept class "Stethoscope" when a neural network classifies whether a person is a "Nurse" or a "Doctor". In another example, the representation vector could encode concept class "Sphere" when a neural network classifies whether an image comprises a "Ping-Pong Ball".

However, in some instances, the representation vector could encode undesirable, or even malicious, concepts, where the concepts relate to user sensitive information and/or misleading information. For example, some concepts may represent detrimental features, such as ones that are not relevant to the downstream task, but are nevertheless spuriously correlated with the target variable, e.g., the background for classifying the type of animal; some of the attributes might represent information that was once informative but nonetheless is no longer so; others may represent sensitive features, such as gender or race, which are undesirable for the model to correlate with. The user sensitive information and/or misleading information should not be considered when the neural network is completing a classification task. This is because the representation vector may encode concepts that can result in spurious correlations between the target variables and the undesirable concept.

For example, the representation vector could encode concept class "Trees" when the neural network classifies whether an image comprises a "Zebra". For example, the representation vector could encode concept class "Gender" when a neural network classifies whether an image comprises an "Apron". In another example, the representation vector could encode concept class "Gender" when a neural network classifies whether a person is a "Nurse" or a "Doctor". In another example, the representation vector could encode concept class "Race" when a neural network classifies whether an image comprises a "Ping-Pong Ball". All the examples reveal the model's reliance on sensitive information (gender and race) or misleading information (trees).

Abhinav Kumar et al. "Probing Classifiers are Unreliable for concept Removal and Detection" discloses that "Neural network models trained on text data have been found to encode undesirable linguistic or sensitive concepts in their representation. Removing such concepts is non-trivial because of a complex relationship between the concept, text input, and the learnt representation. Recent work has proposed post-hoc and adversarial methods to remove such unwanted concepts from a model's representation". There is therefore a desire to detect and remove, or at least reduce, the reliance on an undesirable concept by a neural network, whilst retaining other useful concepts. In more general terms, there is a desire to provide a neural network with improved out-of-distribution (OOD) generalization and distributionally robust optimization (DRO). Removing the undesirable concepts will produce more robust, generalizable and fair models that are oblivious to the presence of them.

The embodiments described below are not limited to implementations which solve any or all of the disadvantages of the known approaches described above.

Summary

This Summary is provided to introduce a selection of concepts in a simplified form that are further described below in the Detailed Description. This Summary is not intended to identify key features or essential features of the claimed subject matter, nor is it intended to be used to determine the scope of the claimed subject matter.

According to a first aspect of the invention, there is provided a system for removing a concept from a trained neural network for executing a classification task on an input corrupted data item, wherein the input corrupted data item is an image or video, and an output of the classification task is a classification of an object present in the image or video, the system comprising:

the trained neural network, wherein the trained neural network comprises a hidden layer; and a plurality of classifiers respectively incorporated in a plurality of layers of the hidden layer, wherein: the hidden layer comprises a plurality of contracting layers and respectively a plurality of layers preceding the contracting layers, wherein the plurality of contracting layers have smaller dimensions than the plurality of layers preceding the contracting layers; the plurality of classifiers are respectively incorporated in the plurality of layers preceding the contracting layers; each classifier defines a representation vector at the layer of the hidden layer, wherein the concept is relevant to the classification task and the representation vector classifies instances of the concept and non-instances of the concept at the layer; each classifier defines a concept activation vector, wherein the concept activation vector is a normal vector to the representation vector and the concept activation vector comprises an adversarial penalty objective to reduce the instances of the concept at the layer; and a loss function of the trained neural network is optimised based on a downstream loss of the classification task and the adversarial penalty objective.

In an embodiment, the hidden layer comprises a contracting layer and a layer preceding the contracting layer, wherein the contracting layer has smaller dimensions than the layer preceding the contracting layer.

In an embodiment, the hidden layer comprises a plurality of contracting layers and a plurality of layers preceding the contracting layers, wherein the plurality of contracting layers have smaller dimensions than the plurality of layers preceding the contracting layers; and the plurality of classifiers are respectively applied to the plurality of layers preceding the contracting layers.

In an embodiment, the classifier has been trained on a concept dataset, wherein the concept dataset comprises examples of the concept instances and examples non-concept instances.

In an embodiment, the examples of the concept instances and examples non-concept instances are out-of-distribution of a training data of the classification task.

In an embodiment, the examples of the concept instances are abstract examples of the concept unrelated to the training data of the classification task and the examples non-concept instances are random data items.

In an embodiment, the classifier is a linear adversarial classifier.

In an embodiment, the adversarial penalty objective is *adversarial penalty* $= \gamma \|v_{C,k,\lambda}(W)\|^2$, wherein: $\gamma$ is a scaling factor; and $v_{C,k,\lambda}(W)$ is the concept activation vector, wherein:

$$v_{C,k,\lambda}(W) = argmin \sum_{i=1}^{N_C} \ell_{BCE}(\sigma(v^T h_k(X;W)), A_i^C) + \lambda \|v\|^2, \ \lambda > 0; \ \ell_{BCE}$$ is the binary cross-entropy loss, wherein $\ell_{BCE}(p,y) = -y log p - (1 - y) log (1 - p)$; $\sigma(x)$ is the sigmoid function, wherein $\sigma(x) = 1/1(1 + e^{-x})$; $\theta$ is a parameter vector of the trained neural network; $h_k$ is the representation vector at the layer; W is the parameter of the representation; and $f_k(...;\theta)$ is the classifier applied at the layer of the trained neural network.

In an embodiment, the adversarial penalty objective is optimised with implicit gradients.

In an embodiment, the loss function is the sum of the downstream loss of the classification task and the adversarial penalty objective.

In an embodiment, the loss function is optimised by stochastic gradient descent.

According to a second aspect of the invention, there is provided a computer implemented method for removing a concept from a trained neural network for executing a classification task on an input corrupted data item, wherein the input corrupted data item is an image or video, and an output of the classification task is a classification of an object present in the image or video, wherein the trained neural network comprises a hidden layer, the method comprising: respectively incorporating a plurality of classifiers to a plurality of layers of the hidden layer, wherein: the hidden layer comprises a plurality of contracting layers and respectively a plurality of layers preceding the contracting layers, wherein the plurality of contracting layers have smaller dimensions than the plurality of layers preceding the contracting layers; and the plurality of classifiers are respectively incorporated in the plurality of layers preceding the contracting layers; defining a representation vector at the plurality of layers of the hidden layer, wherein the concept is relevant to the classification task and representation vector classifies instances of the concept and non-instances of the concept at the layer; defining a concept activation vector, wherein the concept activation vector is a normal vector to the representation vector and the concept activation vector comprises an adversarial penalty objective to reduce the instances of the concept; and optimising a loss function of the trained neural network based on a downstream loss of the classification task and the adversarial penalty objective.

According to a third aspect of the invention, there is provided a computer implemented method for training a neural network to remove a concept from the neural network, wherein the neural network is for executing a classification task on an input corrupted data item, wherein the input corrupted data item is an image or video, and an output of the classification task is a classification of an object present in the image or video, the method comprising: training a plurality of classifiers to define a representation vector at a respective plurality of layers of a hidden layer of the neural network, wherein the concept is relevant to the classification task and the representation vector classifies instances of the concept and non-instances of the concept at the layer, wherein training the classifier comprises: providing a concept dataset to each classifier, wherein the concept dataset comprises examples of concept class instances and examples of non-concept instances; and defining a concept activation vector, wherein the concept activation vector is a normal vector to the representation vector and the concept activation vector comprises an adversarial penalty objective to reduce the instances of the concept at the layer; respectively incorporating a plurality of classifiers to a plurality of layers of the hidden layer, wherein: the hidden layer comprises a plurality of contracting layers and respectively a plurality of layers preceding the contracting layers, wherein the plurality of contracting layers have smaller dimensions than the plurality of layers preceding the contracting layers; and the plurality of classifiers are respectively incorporated in the plurality of layers preceding the contracting layers.

According to a fourth aspect of the invention, there is provided a computer readable storage medium for removing a concept from a trained neural network when executed by one or more processing devices, the computer readable instructions causes the one or more processing devices to carry out the second or third aspect of the invention.

The methods described herein may be performed by software in machine readable form on a tangible storage medium e.g. in the form of a computer program comprising computer program code means adapted to perform all the steps of any of the methods described herein when the program is run on a computer and where the computer program may be embodied on a computer readable medium. Examples of tangible (or non-transitory) storage media include disks, thumb drives, memory cards etc. and do not include propagated signals. The software can be suitable for execution on a parallel processor or a serial processor such that the method steps may be carried out in any suitable order, or simultaneously.

This application acknowledges that firmware and software can be valuable, separately tradable commodities. It is intended to encompass software, which runs on or controls "dumb" or standard hardware, to carry out the desired functions. It is also intended to encompass software which "describes" or defines the configuration of hardware, such as HDL (hardware description language) software, as is used for designing silicon chips, or for configuring universal programmable chips, to carry out desired functions.

The preferred features may be combined as appropriate, as would be apparent to a skilled person, and may be combined with any of the aspects of the invention.

Brief Description of the Drawings

Embodiments of the invention will be described, by way of example, with reference to the following drawings, in which:

Figure 1 shows a corrupted image comprising MNIST digits with spuriously correlated stripes;

Figure 2 shows a concept dataset for removing a "Stripe" concept from the neural network;

Figure 3 shows a concept activation vector of a linear adversarial classifier;

Figure 4 shows a neural network implementing the linear adversarial classifier at a penultimate layer of a trained neural network;

Figure 5 shows a trained neural network implementing the linear adversarial classifier at a hidden layer of the trained neural network;

Figure 6 shows a trained neural network comprising a layer preceding contraction and a penultimate layer of the trained neural network implementing the linear adversarial classifier;

Figure 7 shows a trained neural network implementing a plurality of linear adversarial classifiers;

Figure 8 shows a trained neural network comprising a plurality of layers preceding contraction and implementing a plurality of linear adversarial classifiers at the layers preceding contraction; and

Figure 9 shows a specific worked example of a trained neural network according to an embodiment.

Common reference numerals are used throughout the figures to indicate similar features.

Detailed Description

Embodiments of the present invention are described below by way of example only. These examples represent the best mode of putting the invention into practice that are currently known to the Applicant although they are not the only ways in which this could be achieved. The description sets forth the functions of the example and the sequence of steps for constructing and operating the example. However, the same or equivalent functions and sequences may be accomplished by different examples.

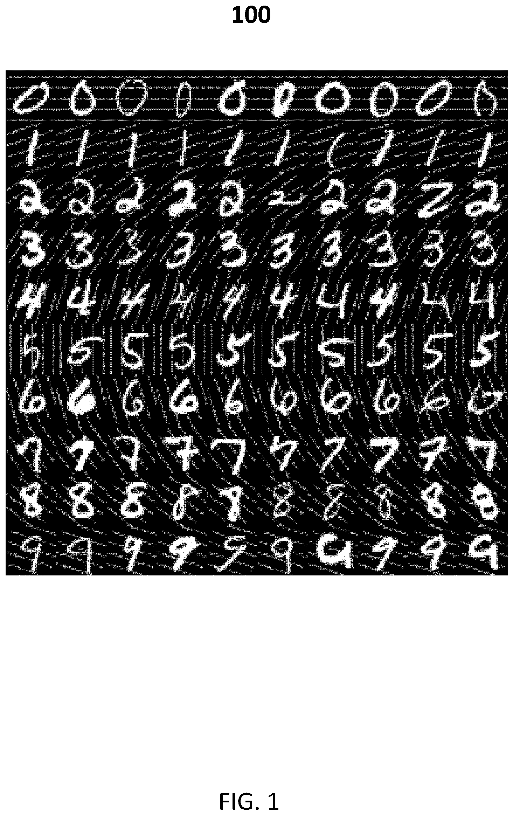

Figure 1 shows a corrupted image 100 from an MNIST dataset, comprising MNIST digits with spuriously correlated stripes. The illustrated embodiments show a corrupted image 100; however, the present invention is applicable to any form of data item. For example, video, audio, text, etc. This list is not intended to be exhaustive. Other data items are supported in some Notably, only the embodiments with videos and images are claimed. examples

The corrupted image 100 is a corrupted MNIST image, wherein the MNIST digits are undesirably correlated with stripes. Each digit of the corrupted MNIST image includes stripes within its background, wherein the angle of the stripes spuriously correlates to the MNIST digit. For example, all MNIST digit "0" has stripes at an angle "Angle A", all MNIST digit "1" has stripes at an angle "Angle B", all MNIST digit "2" has stripes at an angle "Angle C", etc. Accordingly, there is a spurious correlation between the angle of the stripes in the corrupted MNIST image and the digit in the corrupted MNIST image. This is because the angle of the stripes should have no relevance when a neural network is determining the numerical value of MNIST digit. Instead, the neural network should only take into account, for example, the size and shape of the MNIST digits. However, undesirably, a trained neural network may rely on the angle of the stripes when determining the MNIST digit from the corrupted image 100. Therefore, it is desirable to remove the concept "Stripes" from a neural network trained to identify MNIST digits from the corrupted image 100.

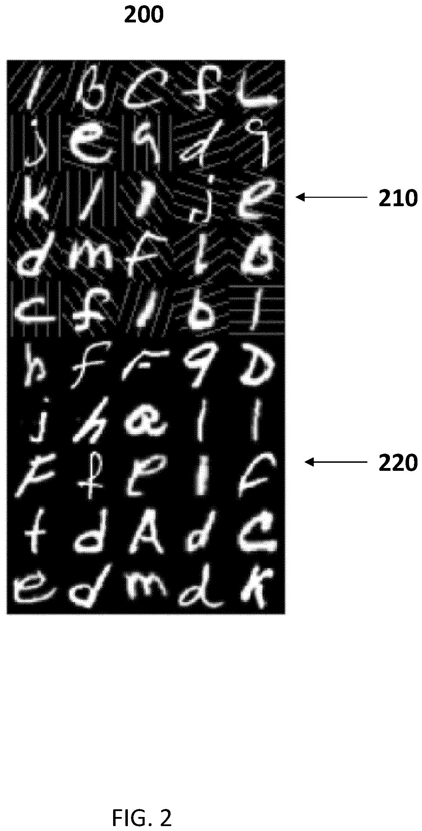

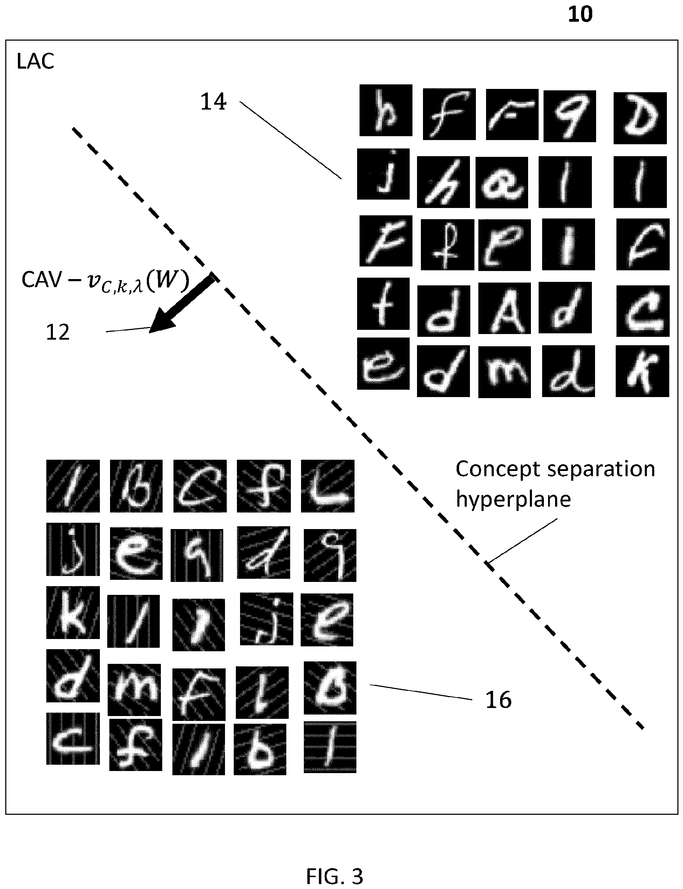

Figure 2 shows a concept dataset 200 for removing the "Stripes" concept from a neural network trained to identify MNIST digits from the corrupted image 100. Figure 3 shows a neural network 300 implementing a linear adversarial classifier (LAC) 10.

To remove the concept "Stripes" from a trained neural network trained to identify MNIST digits from the corrupted image 100, a linear adversarial classifier (LAC) 10 is trained using a concept dataset 200 to determine the extent to which the neural network is influenced by the "Stripes" concept.

After training the LAC 10 using the concept dataset 200, the LAC 10 defines a concept activation vector (CAV) 12 that determines whether the trained neural network is influenced by the "Stripes" concept. The CAV 12 is derived from a vector representation from a layer of the trained neural network, for example, a layer in a hidden layer of the trained neural network and/or a penultimate layer of the trained neural network.

The concept dataset 200 comprises examples of concept class instances 210 and examples of non-concept instances 220. The concept dataset 200 of the present embodiment comprises examples of "Stripes" concept class instances and examples of non-"Stripes" concept class instance. Figure 2 shows the top five rows including examples of the concept class "Stripes" and the bottom five rows show examples that do not belong to the concept class "Stripes".

In the illustrated embodiment of Figure 2, the concept dataset 200 comprises examples of the concept class "Stripes" and examples that do not belong to the concept class "Stripes", both from the EMNIST (not MNIST) letters. The examples of concept class instances 210 can be abstract examples of the concept. The examples of non-concept instances 220 can be random data items. In other words, the concept dataset 200 may not be directly related to the classification task that the neural network is trained to do. Instead, the concept dataset 200 can be out-of-distribution of the training distribution. This is advantageous because then the CAV will not be restricted by spurious correlations present in the training data. A concept dataset 200 comprising abstract concept class instances 210 and random non-concept instances 220 advantageously allows the use of pre-labelled public datasets including the undesirable concept. The concept dataset 200 can resemble the input of the trained neural network and still be out-of-distribution. For example, the illustrated embodiment shows that EMNIST digits resembles the input MNIST digits but are nevertheless out-of-distribution.

The concept dataset 200 can be expressed as $(X_i^C, A_i^C)_{i=1}^{N_C}$, wherein: C refers to the concept class; $N_C$ is the total number of examples in the concept dataset 200; i is an index of an example of the concept dataset 200; $X_i^C$ are the instances of the concept dataset 200; and $A_i^C \in \{0,1\}$ and indicates whether the instance $X_i^C$ is from the concept class, or not.

The neural network has a prediction model in the form $P(Y|X)$, wherein Y is an output of the trained neural network and X is the input of the trained neural network. The trained neural network has the following equation $P(Y|X) = f_k(h_k(X;W);\theta)$.

$\theta$ is a parameter vector of the trained neural network. $h_k$ is a representation vector of the $k^{th}$ layer of the trained neural network, which is also herein referred to as the representation. $W$ is the parameter of the representation. $f_k(...;\theta)$ is a classifier applied at the $k^{th}$ layer of the trained neural network.

Figure 3 shows a concept activation vector 12 of the linear adversarial classifier 10. The CAV 12 of the LAC 10 is denoted as $v_{c,K,\lambda}(W)$. The CAV 12 is a normal vector to the hyperplane separating the corresponding representations (concept separation hyperplane), i.e. the instances of the concept class and non-instances of the concept class. The sensitivity of the trained neural network to the concept class is calculated by taking a directional derivative of the CAV 12. The sensitivity of the trained neural network to the concept class can be used to check the extent to which the concept class is relied on for the classification task. For example, in this instance, the stripe class for the classification of the MNIST digits in the corrupted image 100. Therefore, a change in the in the sensitivity of the trained neural network to the concept class can be observed in response to the input X in the direction of the CAV 12. The sensitivity of the trained neural network to the concept class has the following equation

$$S_C(X) = \lim_{\epsilon \to 0} \frac{f\big(h(X) + \epsilon v_{C,\lambda}(W)\big) - f\big(h(X)\big)}{\epsilon} = \frac{\partial f\big(h(X)\big)}{\partial h^T} v_{C,k,\lambda}(W)$$

The CAV 12 comprises a penalized logit regression. The CAV 12 has the following equation

$$v_{C,\lambda}(W) = argmin \sum_{i=1}^{N_C} \ell_{BCE}\big(\sigma\big(v^T h_k(X;W)\big), A_i^C\big) + \lambda \|v\|^2, \ \lambda > 0$$

$\ell_{BCE}$ is the binary cross-entropy loss, wherein $\ell_{BCE}(p,y) = -y log p - (1 - y)\log(1 - p)$. $\sigma(x)$ is the sigmoid function, wherein $\sigma(x) = 1/1(1 + e^{-x})$.

The CAV 12 of the LAC 10 is penalized to encourage the neural network to be less influenced by the undesirable concept class. The LAC 10 is trained using an implicit differentiation technique. This improves stability of adversarial training. Therefore, the trained neural network can optimise the following objective with implicit gradients.

The CAV has the following adversarial penalty objective *adversarial penalty* $= \gamma\|v_{C,k,\lambda}(W)\|^2$, wherein $\gamma$ is a scaling factor. Therefore, the loss function of the neural network is *Total Loss = Downstream Loss + Adversarial Penalty* .

The downstream loss is a loss from the downstream task and depends on the input data of the trained neural network, such as, in this example, the classification of stripped MNIST digits. The total loss can be optimised by various optimisation methods, such as stochastic gradient descent. The skilled person would understand that other gradient descent algorithms can be used for the optimisation method, such as stochastic gradient with momentum and ADAM.

A linear adversarial classifier (LAC) is particularly advantageous over other adversarial classifiers because concepts are often associated with linear directions in a latent space. A LAC is also particularly advantageous over other adversarial classifiers because, due to the differences in the data sources for the downstream task (MNIST in this example) and the concept dataset (EMNIST in this example), a LAC is more likely to generalize between the two datasets. LAC is also particularly well suited for optimising the classification task with implicit gradients. However, it is not essential that a LAC is used to remove an undesirable concept from the trained neural network. The skilled person would understand that other classifiers, such as non-linear classifiers, or standard adversarial training methods could be used to obtain the CAV 12.

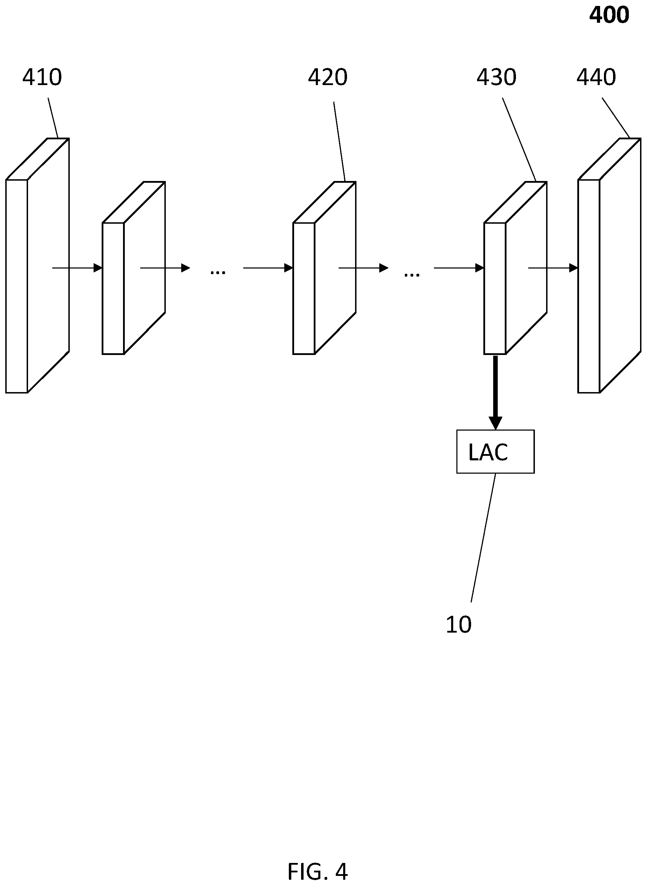

Figure 4 shows a trained neural network 400 implementing a LAC 10 at a penultimate layer 430 of the trained neural network 400. The trained neural network 400 comprises an input layer 410, a hidden layer 420, a penultimate layer 430, an output layer 440.

The trained neural network 400 is trained to classify the value present in the instance of the corrupted image 100. The trained neural network 400 receives an instance of a corrupted image 100 at the input layer 410. Subsequent hidden layers 420 receive a signal from a preceding hidden layer or input layer and output a corresponding signal depending on the weights of each node of each hidden layer 420. The penultimate layer 430 of the trained neural network 400, receives a signal from a preceding hidden layer and outputs a corresponding signal depending on the weights of each node of the penultimate layer 430. The penultimate layer 430 outputs a signal to the output layer 440, which determines the classification of the value present in the instance of the corrupted image 100, i.e. 0 - 9 of the MNIST digits.

In the illustrated embodiment, a LAC 10 is applied to the penultimate layer 430 of the trained neural network 400. The LAC 10 obtains a concept activation vector 12 of the output of the penultimate layer 430. The CAV 12 is obtained by training the LAC 10 with the concept dataset 200. The CAV 12 classifies whether the "Stripe" concept influenced the classification of the value present in the instance of the corrupted image 100.

After the CAV 12 is obtained by the LAC 10 at the penultimate layer 430, the adversarial penalty of the CAV 12 is calculated according to *adversarial penalty* $= \gamma\|v_{C,k,\lambda}(W)\|^2$. Accordingly, the total loss function of the current classification carried out by the trained neural network 400 is obtained according to *Total Loss = Downstream Loss + Adversarial Penalty* .

Thereafter, the trained neural network 400 is optimised to reduce the downstream loss and the adversarial penalty using an optimisation method, such as stochastic gradient descent. After the trained neural network 400 is optimised, the trained neural network removes the undesirable concept when carrying out the classification task.

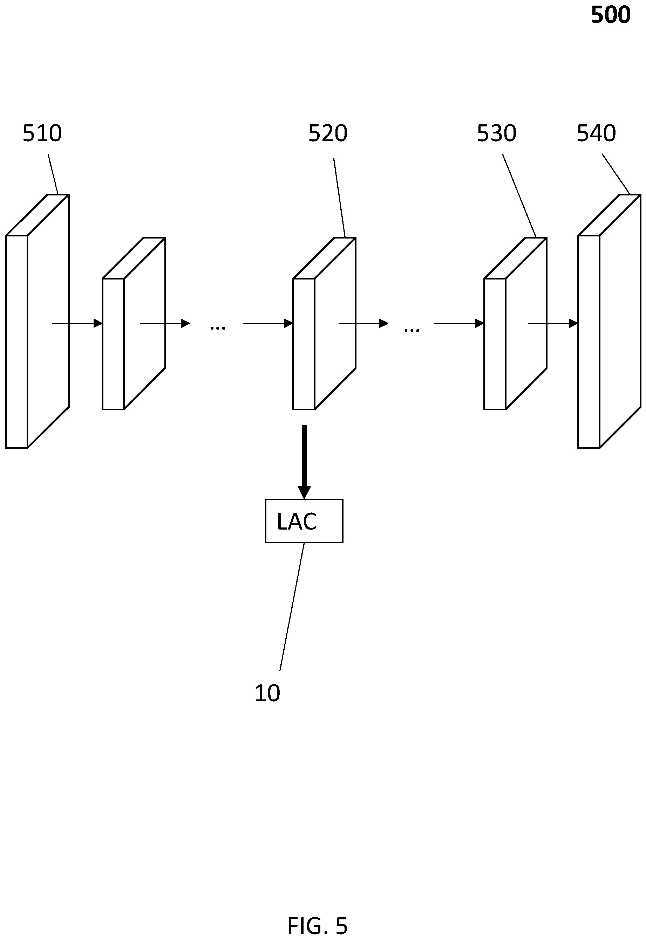

Figure 5 shows a trained neural network 500 implementing the linear adversarial classifier 10 at a hidden layer 520 of the trained neural network 500. For simplicity, only the differences between the trained neural network 400 of Figure 4 and the trained neural network 500 of Figure 5 shall be explained.

Information about a concept propagates through the layers of the trained neural network 500. As the information about the concept propagates through a single layer, the information is entangled with other layers and neurons of the trained neural network 500. Accordingly, it is desirable to remove an undesirable concept before the concept entangles with other features in subsequent layers and neurons of the trained neural network 300.

In order to remove an undesirable concept before the concept entangles with other features in subsequent layers, the LAC 10 is applied at a hidden layer 520 of the trained neural network 500. The LAC 100 can be applied at a layer other than the input layer 510, penultimate layer 530 or the output layer 540. Advantageously, removing an undesirable concept before the undesirable concept entangles with other parts of the trained neural network improves robustness and out-of-distribution (OOD) generalization of the trained neural network 300 to complete the classification task.

Advantageously, the plurality LACs are applied to deeper layers in the neural network. This helps to improve transferability of the representations between examples of concept class instances and non-concept instances.

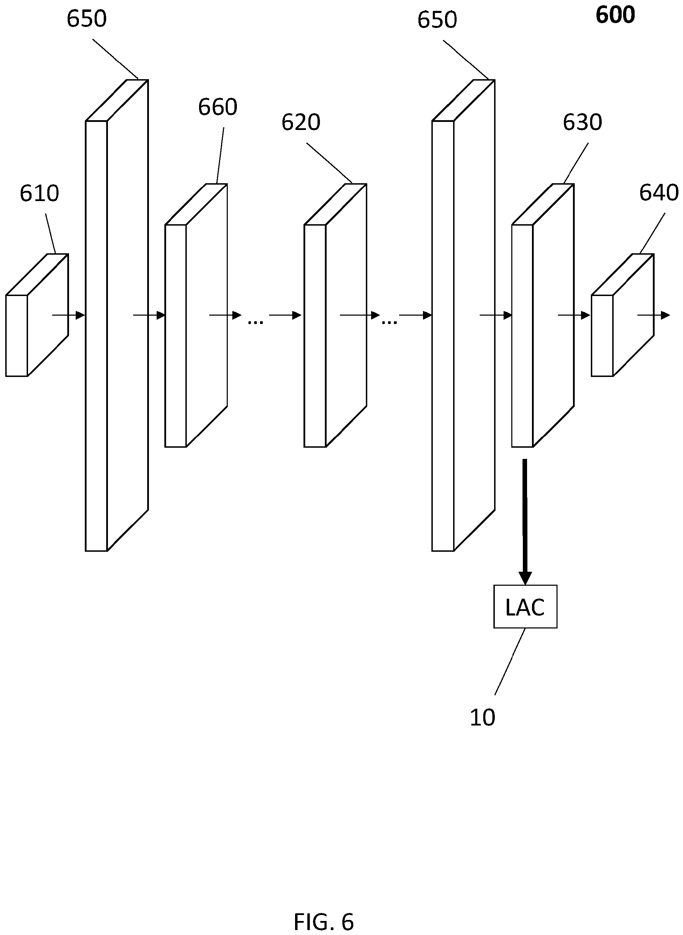

Figure 6 shows a trained neural network comprising contracting layers and implementing the linear adversarial classifier at the penultimate layer of the trained neural network. For simplicity, only the differences between the trained neural network 400 of Figure 4 and the trained neural network 600 of Figure 6 shall be explained.

The trained neural network 600 of Figure 6 comprises a contracting layer 660. The trained neural network 600 further comprises a layer preceding contraction 650. The contracting layer 660 and the layer preceding contraction 650 can be in a hidden layer of the trained neural network 600. A layer preceding contraction 650 is a layer in the trained neural network 600, wherein the contracting layer of the trained neural network 600 receiving the output of the layer preceding contraction 650 as input is smaller in dimension than the layer preceding contraction 650. When the LAC 10 is applied at the penultimate layer 630 of a trained neural network 600 with contracting layers 650, concept removal is further improved. The penultimate layer can also be a contracting layer 660 or a layer preceding contraction 660, as shown in Figure 6.

The trained neural network 600 can comprise a layer preceding contraction 650 in the hidden layers 620 of the trained neural network 600. The penultimate layer 630 can also be a layer preceding contraction 650.

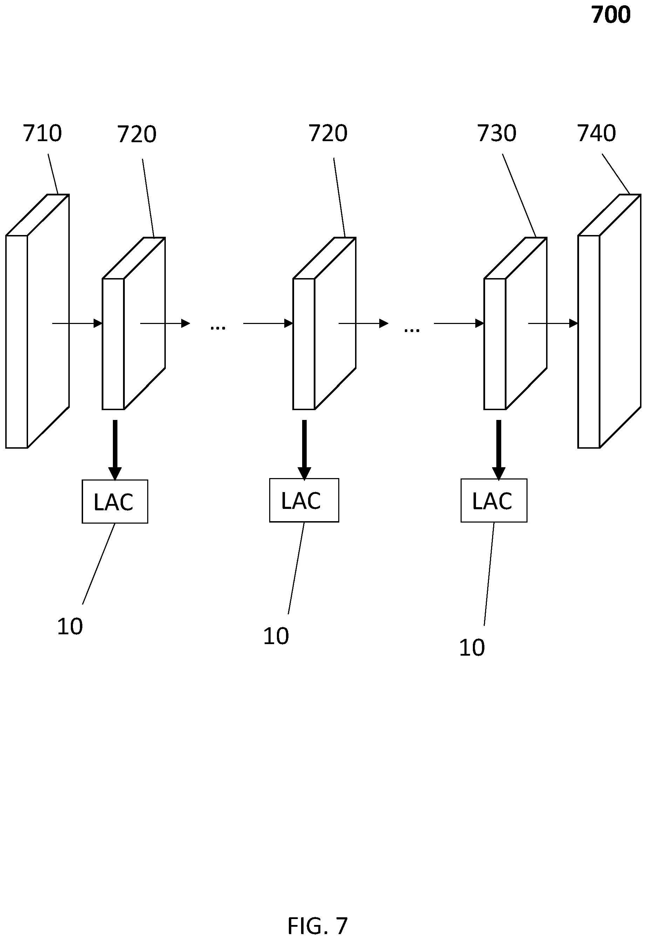

Figure 7 shows a trained neural network 700 implementing a plurality of LACs at a plurality of layers in a hidden layer of the trained neural network 700. For simplicity, only the differences between the trained neural network 500 of Figure 5 and the trained neural network 700 of Figure 7 shall be explained.

To further prevent an undesirable concept to propagate through the trained neural network 700, a plurality of LACs 10 are incorporated in a plurality of layers in the hidden layer 720 of the trained neural network 700. For example, the illustrated embodiment of trained neural network 700 shows that the plurality of LACs 10 are applied to hidden layers 720 and the penultimate layer 730. The plurality of LACs 10 can work simultaneously to remove the concept from the trained neural network 700 at the plurality of layers in the hidden layer 720.

Accordingly, where there is a plurality of LACs 10, the neural network can optimise the following objective with implicit gradients.

$$Total\ Loss = Downstream\ loss + Total\ Sum\ of\ Adversarial\ Penalties$$

$$Total\ Sum\ of\ Adversarial\ Penalties = \sum_{m=1}^{M} \gamma \left\| v_{C,\ k_m, \lambda_m}(W) \right\|^2$$

$k_m$ is the layer of a linear adversarial classifier. $\lambda_m$ is the regularization parameter. M is the total number of linear adversarial classifiers. m is an index for the linear adversarial classifiers. $\gamma$ is a scaling factor.

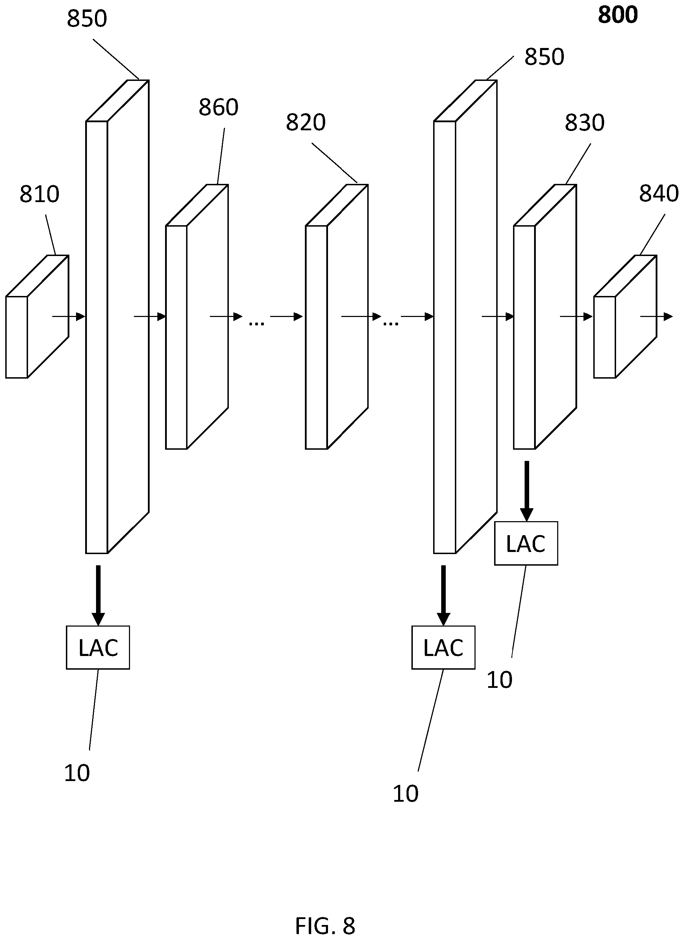

Figure 8 shows a trained neural network comprising a plurality of layers preceding contraction 850 each respectively implementing a plurality of LACs 10. For simplicity, only the differences between the trained neural network 600 of Figure 6 and the trained neural network 800 of Figure 8 shall be explained.

Advantageously, the LACs 10 are applied at the layer preceding contraction 850. This significantly improves the effectiveness of removing an undesirable concept. It is not essential for the LACs to be applied to all layers preceding contraction 850. The LACs can be applied to at least one layer preceding contraction 850. The LACs 10 can be applied, in combination, at layers preceding contraction 850 and non-contracting layers, i.e. any other layer in the hidden layer 820 of the trained neural network 800.

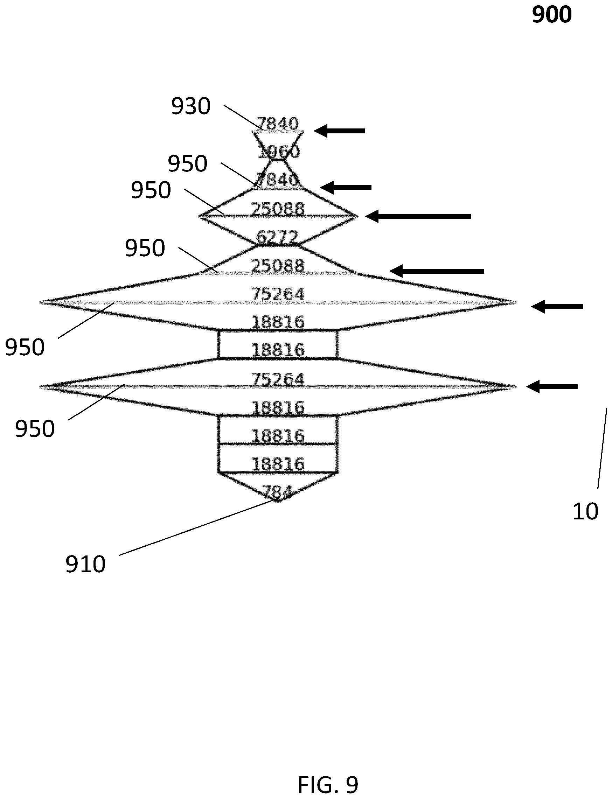

Figure 9 shows a specific worked example of a trained neural network 900 according to an embodiment. A worked example of the embodiments set out above will now be described with reference to Figure 9.

Figure 9 shows a ConvNet with the width of each layer corresponding to the total dimension of a flattened representation. The bottom number present at the first bottom layer corresponds to input dimension 784 = 28 x 28. Each layer preceding contraction 950 of the trained neural network 900 are pointed with an arrow. The last layer, the output layer, of the trained neural network 900 is not shown for simplicity.

The trained neural network 900 was tested to classify the MNIST digit in corrupted image 100 showing the striped MNIST dataset. LACs 10 were applied to various combinations of layers of the trained network 900. In the table below, for each combination we show train and test error percentages, with testing done on images without stripes, i.e. non-corrupted images. The table shows that applying the LAC 10 to layer preceding contraction 950 significantly improves the test results. The layer preceding contraction 950 in the table are marked with (p).

| Set of Layers | Train | test |
|---|---|---|
| 5, 6, 7(p), 13(p) | 91.1 | 94.3 |
| 4(c), 7(p), 10(p), 13(p) | 88.8 | 93.8 |
| 4(p), 6, 7(p), 12, 13(p) | 89.2 | 93.5 |
| 1, 7(p), 8(p), 11(p), 13(p) | 88.3 | 93.3 |
| 2, 3, 7(p), 8(p), 13(p) | 88.3 | 92.8 |
| 4(p), 7(p), 8(p), 10(p), 13(p) | 85.4 | 92.5 |
| 4(p), 7(p), 8(p), 10(p), 11(p), 13(p) | 85.5 | 92.3 |
| 4(p), 7(p), 10(p), 11(p), 13(p) | 87.5 | 88.4 |
| 5, 7(p), 8(p), 9, 11(p) | 96.0 | 54.3 |
| 1, 7(p), 8(p), 9, 10(p) | 90.8 | 51.5 |
| 2, 8(p), 10(p), 11(p) | 100.0 | 24.9 |
| 4(p), 5, 7(p), 10(p) | 100.0 | 18.2 |
| 1, 6, 11(p) | 100.0 | 15.8 |
| 2, 4(p), 12 | 100.0 | 14.9 |
| 4(p), 5, 8(p) | 100.0 | 13.9 |
| 10(p) | 100.0 | 13.2 |
| 13(p) | 99.3 | 13.0 |
| 3, 4(p), 5, 7(p) | 100.0 | 12.8 |
| 11(p), 12 | 100.0 | 12.5 |
| 3, 5, 9 | 99.8 | 12.1 |
| 5, 13(p) | 100.0 | 11.9 |
| 1, 9 | 100.0 | 11.8 |
| 7(p) | 100.0 | 11.4 |
| 1, 2, 9, 12 | 100.0 | 11.2 |

The embodiments described above are fully automatic. In some examples a user or operator of the system may manually instruct some steps of the method to be carried out.

In the described embodiments of the invention parts of the system may be implemented as a form of a computing and/or electronic device. Such a device may comprise one or more processors which may be microprocessors, controllers or any other suitable type of processors for processing computer executable instructions to control the operation of the device in order to gather and record routing information. In some examples, for example where a system on a chip architecture is used, the processors may include one or more fixed function blocks (also referred to as accelerators) which implement a part of the method in hardware (rather than software or firmware). Platform software comprising an operating system or any other suitable platform software may be provided at the computing-based device to enable application software to be executed on the device.

Various functions described herein can be implemented in hardware, software, or any combination thereof. If implemented in software, the functions can be stored on or transmitted over as one or more instructions or code on a computer-readable medium. Computer-readable media may include, for example, computer-readable storage media.

Computer-readable storage media may include volatile or non-volatile, removable or non-removable media implemented in any method or technology for storage of information such as computer readable instructions, data structures, program modules or other data. A computer-readable storage media can be any available storage media that may be accessed by a computer. By way of example, and not limitation, such computer-readable storage media may comprise RAM, ROM, EEPROM, flash memory or other memory devices, CD-ROM or other optical disc storage, magnetic disc storage or other magnetic storage devices, or any other medium that can be used to carry or store desired program code in the form of instructions or data structures and that can be accessed by a computer. Disc and disk, as used herein, include compact disc (CD), laser disc, optical disc, digital versatile disc (DVD), floppy disk, and blu-ray disc (BD). Further, a propagated signal is not included within the scope of computer-readable storage media. Computer-readable media also includes communication media including any medium that facilitates transfer of a computer program from one place to another. A connection, for instance, can be a communication medium. For example, if the software is transmitted from a website, server, or other remote source using a coaxial cable, fiber optic cable, twisted pair, DSL, or wireless technologies such as infrared, radio, and microwave are included in the definition of communication medium. Combinations of the above should also be included within the scope of computer-readable media.

Alternatively, or in addition, the functionality described herein can be performed, at least in part, by one or more hardware logic components. For example, and without limitation, hardware logic components that can be used may include Field-programmable Gate Arrays (FPGAs), Program-specific Integrated Circuits (ASICs), Program-specific Standard Products (ASSPs), System-on-a-chip systems (SOCs), Complex Programmable Logic Devices (CPLDs), etc.

Although illustrated as a single system, it is to be understood that a computing device may be a distributed system. Thus, for instance, several devices may be in communication by way of a network connection and may collectively perform tasks described as being performed by the computing device. Although illustrated as a local device it will be appreciated that the computing device may be located remotely and accessed via a network or other communication link (for example using a communication interface).

The term 'computer' is used herein to refer to any device with processing capability such that it can execute instructions. Those skilled in the art will realise that such processing capabilities are incorporated into many different devices and therefore the term 'computer' includes PCs, servers, mobile telephones, personal digital assistants and many other devices.

Those skilled in the art will realise that storage devices utilised to store program instructions can be distributed across a network. For example, a remote computer may store an example of the process described as software. A local or terminal computer may access the remote computer and download a part or all of the software to run the program. Alternatively, the local computer may download pieces of the software as needed, or execute some software instructions at the local terminal and some at the remote computer (or computer network). Those skilled in the art will also realise that by utilising conventional techniques known to those skilled in the art that all, or a portion of the software instructions may be carried out by a dedicated circuit, such as a DSP, programmable logic array, or the like.

It will be understood that the benefits and advantages described above may relate to one embodiment or may relate to several embodiments. The embodiments are not limited to those that solve any or all of the stated problems or those that have any or all of the stated benefits and advantages. Variants should be considered to be included into the scope of the invention.

Any reference to 'an' item refers to one or more of those items. The term 'comprising' is used herein to mean including the method steps or elements identified, but that such steps or elements do not comprise an exclusive list and a method or apparatus may contain additional steps or elements.

As used herein, the terms "component" and "system" are intended to encompass computer-readable data storage that is configured with computer-executable instructions that cause certain functionality to be performed when executed by a processor. The computer-executable instructions may include a routine, a function, or the like. It is also to be understood that a component or system may be localized on a single device or distributed across several devices.

Further, as used herein, the term "exemplary" is intended to mean "serving as an illustration or example of something".

Further, to the extent that the term "includes" is used in either the detailed description or the claims, such term is intended to be inclusive in a manner similar to the term "comprising" as "comprising" is interpreted when employed as a transitional word in a claim.

The figures illustrate exemplary methods. While the methods are shown and described as being a series of acts that are performed in a particular sequence, it is to be understood and appreciated that the methods are not limited by the order of the sequence. For example, some acts can occur in a different order than what is described herein. In addition, an act can occur concurrently with another act. Further, in some instances, not all acts may be required to implement a method described herein.

Moreover, the acts described herein may comprise computer-executable instructions that can be implemented by one or more processors and/or stored on a computer-readable medium or media. The computer-executable instructions can include routines, sub-routines, programs, threads of execution, and/or the like. Still further, results of acts of the methods can be stored in a computer-readable medium, displayed on a display device, and/or the like.

The order of the steps of the methods described herein is exemplary, but the steps may be carried out in any suitable order, or simultaneously where appropriate. Additionally, steps may be added or substituted in, or individual steps may be deleted from any of the methods without departing from the scope of the subject matter described herein. Aspects of any of the examples described above may be combined with aspects of any of the other examples described to form further examples without losing the effect sought.

It will be understood that the above description of a preferred embodiment is given by way of example only and that various modifications may be made by those skilled in the art. What has been described above includes examples of one or more embodiments. It is, of course, not possible to describe every conceivable modification and alteration of the above devices or methods for purposes of describing the aforementioned aspects, but one of ordinary skill in the art can recognize that many further modifications and permutations of various aspects are possible. Accordingly, the described aspects are intended to embrace all such alterations, modifications, and variations that fall within the scope of the appended claims.

## Claims

1. A system for removing a concept from a trained neural network (700, 800, 900) for executing a classification task on an input corrupted data item (100), wherein the input corrupted data item is an image or video, and an output of the classification task is a classification of an object present in the image or video, the system comprising:

   the trained neural network (700, 800, 900), wherein the trained neural network (700, 800, 900) comprises a hidden layer (720, 820); and
   a plurality of classifiers (10) respectively incorporated in a plurality of layers of the hidden layer (720, 820), wherein:

   the hidden layer (720, 820) comprises a plurality of contracting layers (860) and respectively a plurality of layers preceding the contracting layers (850), wherein the plurality of contracting layers (860) have smaller dimensions than the plurality of layers preceding the contracting layers (850);
   the plurality of classifiers (10) are respectively incorporated in the plurality of layers preceding the contracting layers (850);
   each classifier (10) defines a representation vector at the layer of the hidden layer (720, 820), wherein the concept is relevant to the classification task and the representation vector classifies instances of the concept and non-instances of the concept at the layer;
   each classifier defines a concept activation vector (12), wherein the concept activation vector (12) is a normal vector to the representation vector and the concept activation vector (12) comprises an adversarial penalty objective to reduce the instances of the concept at the layer; and
   a loss function of the trained neural network (720, 820) is optimised based on a downstream loss of the classification task and the adversarial penalty objective.

2. A system according to claim 1, wherein one of said classifiers (10) is applied to a penultimate layer (730, 830) of the trained neural network (700, 800, 900).

3. A system according to any preceding claim, wherein the plurality of classifiers (10) have been trained on a concept dataset (200), wherein the concept dataset comprises examples of the concept instances (210) and examples of the non-concept instances (220).

4. A system according to claim 3, wherein the examples of the concept instances (210) and examples of the non-concept instances (220) are out-of-distribution of a training data of the classification task executed by the trained neural network (700, 800, 900).

5. A system according to claim 4, wherein the examples of the concept instances are abstract examples of the concept unrelated to the training data of the classification task executed by the trained neural network (700, 800, 900) and the examples of the non-concept instances are random data items.

6. A system according to any preceding claim, wherein the plurality of classifiers (10) are linear adversarial classifiers (10).

7. A system according to any preceding claim, wherein the adversarial penalty objective is *adversarial penalty* = $\gamma\|v_{C,k,\lambda}$ $(W)\|^2$, wherein:

γ is a scaling factor; and $v_{C,k,\lambda}(W)$ is the concept activation vector, wherein:

$$v_{C,k,\lambda}(W) = argmin \sum_{i=1}^{N_C} \ell_{BCE}\big(\sigma\big(v^T h_k(X;W)\big), A_i^C\big) + \lambda\|v\|^2, \ \lambda > 0;$$

$\ell_{BCE}$ is the binary cross-entropy loss, wherein $\ell_{BCE}(p,y)$ = -ylogp - (1 - y)log (1 - p);
$\sigma(x)$ is the sigmoid function, wherein $\sigma(x)$ = 1/1(1 + $e^{-x}$);
$\theta$ is a parameter vector of the trained neural network (700, 800, 900);
$h_k$ is the representation vector at the layer;
W is the parameter of the representation; and
$f_k(...;\theta)$ is the classifier applied at the layer of the trained neural network (700, 800, 900).

8. A system according to any preceding claim, wherein the adversarial penalty objective is optimised with implicit gradients.

9. A system according to any preceding claim, wherein the loss function is the sum of the downstream loss of the classification task and the adversarial penalty objective.

10. A system according to any preceding claim, wherein the loss function is optimised by stochastic gradient descent.

11. A computer implemented method for removing a concept from a trained neural network (700, 800, 900) for executing a classification task on an input corrupted data item (100), wherein the input corrupted data item is an image or video, and an output of the classification task is a classification of an object present in the image or video, wherein the trained neural network (700, 800, 900) comprises a hidden layer (720, 820), the method comprising:

respectively incorporating a plurality of classifiers (10) to a plurality of layers of the hidden layer (720, 820), wherein:

the hidden layer (720, 820) comprises a plurality of contracting layers (860) and respectively a plurality of layers preceding the contracting layers (850), wherein the plurality of contracting layers (860) have smaller dimensions than the plurality of layers preceding the contracting layers (850); and
the plurality of classifiers (10) are respectively incorporated in the plurality of layers preceding the contracting layers (850);

defining a representation vector at the plurality of layers of the hidden layer (720, 820), wherein the concept is relevant to the classification task and the representation vector classifies instances of the concept and non-instances of the concept at the layer;
defining a concept activation vector (12), wherein the concept activation vector (12) is a normal vector to the representation vector and the concept activation vector (12) comprises an adversarial penalty objective to reduce the instances of the concept; and
optimising a loss function of the trained neural network (700, 800, 900) based on a downstream loss of the classification task and the adversarial penalty objective.

12. A computer implemented method for training a neural network (700, 800, 900) to remove a concept from the neural network (700, 800, 900), wherein the neural network (700, 800, 900) is for executing a classification task on an input corrupted data item (100), wherein the input corrupted data item is an image or video, and an output of the classification task is a classification of an object present in the image or video, the method comprising:

training a plurality of classifiers (10) to each define a representation vector at a respective plurality of layers of a hidden layer (720, 820) of the neural network (700, 800, 900), wherein the concept is relevant to the classification task and the representation vector classifies instances of the concept and non-instances of the concept at the layer, wherein training the classifier (10) comprises:

providing a concept dataset (200) to each classifier (10), wherein the concept dataset (200) comprises examples of concept class instances and examples of non-concept instances; and
defining a concept activation vector (12), based on the concept dataset (200),

wherein the concept activation vector (12) is a normal vector to the representation vector and the concept activation vector (12) comprises an adversarial penalty objective to reduce the instances of the concept at the layer;

respectively incorporating the plurality of classifiers (10) to a plurality of layers of the hidden layer (720, 820), wherein:

the hidden layer (720, 820) comprises a plurality of contracting layers (860) and respectively a plurality of layers preceding the contracting layers (850), wherein the plurality of contracting layers (860) have smaller dimensions than the plurality of layers preceding the contracting layers (850); and
the plurality of classifiers (10) are respectively incorporated in the plurality of layers preceding the contracting layers (850).

13. A computer implemented method according to claim12, wherein the method further comprises optimising a loss function of the neural network (700, 800, 900) based on a downstream loss of the classification task and the adversarial penalty objective.

14. A computer readable storage medium having instructions stored thereon, which, when executed by a computer processor, cause the computer processor to carry out the method according to any of claims 11 to 13

**Patentansprüche**

1. System zum Entfernen eines Konzepts aus einem trainierten neuronalen Netzwerk (700, 800, 900) zum Ausführen einer Klassifikationsaufgabe an einem beschädigten Eingabedatenelement (100), wobei das beschädigte Eingabedatenelement ein Bild oder Video ist und eine Ausgabe der Klassifikationsaufgabe eine Klassifikation eines in dem Bild oder Video vorhandenen Objekts ist, wobei das System umfasst:

das trainierte neuronale Netzwerk (700, 800, 900), wobei das trainierte neuronale Netzwerk (700, 800, 900) eine versteckte Schicht (720, 820) umfasst; und
eine Vielzahl von Klassifikatoren (10), die jeweils in einer Vielzahl von Schichten der versteckten Schicht (720, 820) integriert sind, wobei:

die versteckte Schicht (720, 820) eine Vielzahl von Kontraktionsschichten (860) und jeweils eine Vielzahl von den Kontraktionsschichten vorangehenden Schichten (850) umfasst, wobei die Vielzahl von Kontraktionsschichten (860) kleinere Abmessungen als die Vielzahl von den Kontraktionsschichten vorangehenden Schichten (850) aufweisen;
die Vielzahl von Klassifikatoren (10) jeweils in der Vielzahl von den Kontraktionsschichten vorangehenden Schichten (850), integriert sind;
jeder Klassifikator (10) einen Darstellungsvektor auf der Schicht der versteckten Schicht (720, 820) definiert, wobei das Konzept für die Klassifikationsaufgabe relevant ist und der Darstellungsvektor Instanzen des Konzepts und Nicht-Instanzen des Konzepts auf der Schicht klassifiziert;
jeder Klassifikator einen Konzeptaktivierungsvektor (12) definiert, wobei der Konzeptaktivierungsvektor (12) ein Normalvektor zum Darstellungsvektor ist und der Konzeptaktivierungsvektor (12) ein kontradiktorisches Strafziel umfasst, um die Instanzen des Konzepts auf der Schicht zu reduzieren; und
eine Verlustfunktion des trainierten neuronalen Netzwerks (720, 820) basierend auf einem stromabwärts befindlichen Verlust der Klassifikationsaufgabe und des kontradiktorischen Strafziels optimiert wird.

2. System nach Anspruch 1, wobei einer der Klassifikatoren (10) auf eine vorletzte Schicht (730, 830) des trainierten neuronalen Netzwerks (700, 800, 900) angewendet werden.

3. System nach einem vorstehenden Anspruch, wobei die Vielzahl von Klassifikatoren (10) auf einem Konzeptdatensatz (200) trainiert worden sind, wobei der Konzeptdatensatz Beispiele der Konzeptinstanzen (210) und Beispiele der Nicht-Konzeptinstanzen (220) umfasst.

4. System nach Anspruch 3, wobei die Beispiele der Konzeptinstanzen (210) und Beispiele der Nicht-Konzeptinstanzen (220) außerhalb der Verteilung von Trainingsdaten der Klassifikationsaufgabe liegen, die von dem trainierten neuronalen Netzwerk (700, 800, 900) ausgeführt wird.

5. System nach Anspruch 4, wobei die Beispiele der Konzeptinstanzen abstrakte Beispiele des Konzepts sind, die mit den Trainingsdaten der Klassifikationsaufgabe, die von dem trainierten neuronalen Netzwerk (700, 800, 900) ausgeführt wird, in keinem Zusammenhang stehen, und die Beispiele der Nicht-Konzeptinstanzen zufällige Datenelemente sind.

6. System nach einem vorstehenden Anspruch, wobei die Vielzahl von Klassifikatoren (10) lineare kontradiktorische Klassifikatoren (10) sind.

7. System nach einem vorstehenden Anspruch, wobei das kontradiktorische Strafziel die kontradiktorische Strafe = $\gamma\|v_{C,k,\lambda}(W)\|^2$ ist, wobei:

   $\gamma$ ein Skalierungsfaktor ist; und $v_{C,k,\lambda}(W)$ der Konzeptaktivierungsvektor ist, wobei:

$$v_{C.k.\lambda}(W) = argmin \sum_{i=1}^{N_C} l_{BCE}\big(\sigma\big(v^T h_k(X;\ W)\big). A_i^C\big) + \lambda\|v\|^2. \lambda > 0;$$

   $l_{BCE}$ der binäre Kreuzentropieverlust ist, wobei $l_{BCE}(p.y)$ = $-ylogp$ - $(1 - y)$log $(1 - p)$
   $\sigma(x)$ die Sigmoidfunktion ist, wobei $\sigma(x) = 1/1(1 + e^{-x})$;
   $\theta$ ein Parametervektor des trainierten neuronalen Netzwerks (700, 800, 900) ist;
   $h_k$ der Darstellungsvektor auf der Schicht ist;
   $W$ der Parameter der Darstellung ist; und
   $f_k(...; \theta)$ der Klassifikator ist, der auf der Schicht des trainierten neuronalen Netzwerks (700, 800, 900) angewendet wird.

8. System nach einem vorstehenden Anspruch, wobei das kontradiktorische Strafziel mit impliziten Gradienten optimiert wird.

9. System nach einem vorstehenden Anspruch, wobei die Verlustfunktion die Summe des stromabwärts befindlichen Verlusts der Klassifikationsaufgabe und des kontradiktorischen Strafziels ist.

10. System nach einem vorstehenden Anspruch, wobei die Verlustfunktion durch stochastischen Gradientenabstieg optimiert wird.

11. Computerimplementiertes Verfahren zum Entfernen eines Konzepts aus einem trainierten neuronalen Netzwerk (700, 800, 900) zum Ausführen einer Klassifikationsaufgabe an einem beschädigten Eingabedatenelement (100), wobei das beschädigte Eingabedatenelement ein Bild oder Video ist und eine Ausgabe der Klassifikationsaufgabe eine Klassifikation eines in dem Bild oder Video vorhandenen Objekts ist, wobei das trainierte neuronale Netzwerk (700, 800, 900) eine versteckte Schicht (720, 820) umfasst, wobei das Verfahren umfasst:

   jeweiliges Integrieren einer Vielzahl von Klassifikatoren (10) in eine Vielzahl von Schichten der versteckten Schicht (720, 820), wobei:

      die versteckte Schicht (720, 820) eine Vielzahl von Kontraktionsschichten (860) und jeweils eine Vielzahl von den Kontraktionsschichten vorangehenden Schichten (850) umfasst, wobei die Vielzahl von Kontraktionsschichten (860) kleinere Abmessungen als die Vielzahl von den Kontraktionsschichten vorangehenden Schichten (850) aufweisen; und
      die Vielzahl von Klassifikatoren (10) jeweils in der Vielzahl von den Kontraktionsschichten vorangehenden Schichten (850), integriert sind;

   Definieren eines Darstellungsvektors auf der Vielzahl von Schichten der versteckten Schicht (720, 820), wobei das Konzept für die Klassifikationsaufgabe relevant ist und der Darstellungsvektor Instanzen des Konzepts und Nicht-Instanzen des Konzepts auf der Schicht klassifiziert;
   Definieren eines Konzeptaktivierungsvektors (12), wobei der Konzeptaktivierungsvektor (12) ein Normalvektor zum Darstellungsvektor ist und der Konzeptaktivierungsvektor (12) ein kontradiktorisches Strafziel umfasst, um die Instanzen des Konzepts zu reduzieren; und

Optimieren einer Verlustfunktion des trainierten neuronalen Netzwerks (700, 800, 900) basierend auf einem stromabwärts befindlichen Verlust der Klassifikationsaufgabe und des kontradiktorischen Strafziels.

12. Computerimplementiertes Verfahren zum Trainieren eines neuronalen Netzwerks (700, 800, 900), um ein Konzept aus dem neuronalen Netzwerk (700, 800, 900) zu entfernen, wobei das neuronale Netzwerk (700, 800, 900) zum Ausführen einer Klassifikationsaufgabe an einem beschädigten Eingabedatenelement (100) dient, wobei das beschädigte Eingabedatenelement ein Bild oder Video ist und eine Ausgabe der Klassifikationsaufgabe eine Klassifikation eines in dem Bild oder Video vorhandenen Objekts ist, wobei das Verfahren umfasst:

Trainieren einer Vielzahl von Klassifikatoren (10), um jeweils einen Darstellungsvektor auf einer jeweiligen Vielzahl von Schichten einer versteckten Schicht (720, 820) des neuronalen Netzwerks (700, 800, 900) zu definieren, wobei das Konzept für die Klassifikationsaufgabe relevant ist und der Darstellungsvektor Instanzen des Konzepts und Nicht-Instanzen des Konzepts auf der Schicht klassifiziert, wobei das Trainieren des Klassifikators (10) umfasst:

Bereitstellen eines Konzeptdatensatzes (200) für jeden Klassifikator (10), wobei der Konzeptdatensatz (200) Beispiele von Konzeptklasseninstanzen und Beispiele von Nicht-Konzeptinstanzen umfasst; und
Definieren eines Konzeptaktivierungsvektors (12) basierend auf dem Konzeptdatensatz (200),
wobei der Konzeptaktivierungsvektor (12) ein Normalvektor zum Darstellungsvektor ist und der Konzeptaktivierungsvektor (12) ein kontradiktorisches Strafziel umfasst, um die Instanzen des Konzepts auf der Schicht zu reduzieren;

jeweiliges Integrieren der Vielzahl von Klassifikatoren (10) in eine Vielzahl von Schichten der versteckten Schicht (720, 820), wobei:

die versteckte Schicht (720, 820) eine Vielzahl von Kontraktionsschichten (860) und jeweils eine Vielzahl von den Kontraktionsschichten vorangehenden Schichten (850) umfasst, wobei die Vielzahl von Kontraktionsschichten (860) kleinere Abmessungen als die Vielzahl von den Kontraktionsschichten vorangehenden Schichten (850) aufweisen; und
die Vielzahl von Klassifikatoren (10) jeweils in der Vielzahl von den Kontraktionsschichten vorangehenden Schichten (850), integriert sind.

13. Computerimplementiertes Verfahren nach Anspruch 12, wobei das Verfahren weiter das Optimieren einer Verlustfunktion des neuronalen Netzwerks (700, 800, 900) basierend auf einem stromabwärts befindlichen Verlust der Klassifikationsaufgabe und des kontradiktorischen Strafziels umfasst.

14. Computerlesbares Speichermedium, das darauf gespeicherte Anweisungen aufweist, die, wenn sie von einem Computerprozessor ausgeführt werden, den Computerprozessor veranlassen, das Verfahren nach einem der Ansprüche 11 bis 13 auszuführen.

**Revendications**

1. Système permettant de retirer un concept d'un réseau neuronal formé (700, 800, 900) pour exécuter une tâche de classification sur un élément de données corrompu d'entrée (100), dans lequel l'élément de données corrompu d'entrée est une image ou une vidéo, et une sortie de la tâche de classification est une classification d'un objet présent dans l'image ou la vidéo, le système comprenant :

le réseau neuronal formé (700, 800, 900), dans lequel le réseau neuronal formé (700, 800, 900) comprend une couche cachée (720, 820) ; et
une pluralité de classificateurs (10) respectivement incorporés dans une pluralité de couches de la couche cachée (720, 820), dans lequel :

la couche cachée (720, 820) comprend une pluralité de couches contractantes (860) et respectivement une pluralité de couches précédant les couches contractantes (850), dans lequel la pluralité de couches contractantes (860) présentent des dimensions plus petites que la pluralité de couches précédant les couches contractantes (850);
la pluralité de classificateurs (10) sont respectivement incorporés dans la pluralité de couches précédant les couches contractantes (850) ;

chaque classificateur (10) définit un vecteur de représentation au niveau de la couche cachée (720, 820), dans lequel le concept est pertinent pour la tâche de classification et le vecteur de représentation classe les instances du concept et les non-instances du concept au niveau de la couche ;

chaque classificateur définit un vecteur d'activation de concept (12), dans lequel le vecteur d'activation de concept (12) est un vecteur normal au vecteur de représentation et le vecteur d'activation de concept (12) comprend un objectif de pénalité contradictoire pour réduire les instances du concept au niveau de la couche ; et

une fonction de perte du réseau neuronal formé (720, 820) est optimisée sur la base d'une perte en aval de la tâche de classification et de l'objectif de pénalité contradictoire.

2. Système selon la revendication 1, dans lequel l'un desdits classificateurs (10) est appliqué à une avant-dernière couche (730, 830) du réseau neuronal formé (700, 800, 900).

3. Système selon une quelconque revendication précédente, dans lequel la pluralité de classificateurs (10) ont été formés sur un ensemble de données de concept (200), dans lequel l'ensemble de données de concept comprend des exemples des instances de concept (210) et des exemples des non-instances de concept (220).

4. Système selon la revendication 3, dans lequel les exemples des instances de concept (210) et les exemples des non-instances de concept (220) n'entrent pas dans la diffusion de données d'apprentissage de la tâche de classification exécutée par le réseau neuronal formé (700, 800, 900).

5. Système selon la revendication 4, dans lequel les exemples des instances de concept sont des exemples abstraits du concept sans rapport avec les données d'apprentissage de la tâche de classification exécutée par le réseau neuronal formé (700, 800, 900) et les exemples des non-instances de concept sont des éléments de données aléatoires.

6. Système selon une quelconque revendication précédente, dans lequel la pluralité de classificateurs (10) sont des classificateurs contradictoires linéaires (10).

7. Système selon une quelconque revendication précédente, dans lequel l'objectif de pénalité contradictoire est une pénalité contradictoire = $\gamma \|v_{C\ k\ \lambda}(W)\|^2$, dans lequel :

$\gamma$ est un facteur d'échelle ; et $v_{C,k,\lambda}(W)$ est le vecteur d'activation de concept, dans lequel :

$$v_{C\ k\ \lambda}(W) = argmin \sum_{i=1}^{N_c} l_{BCE}\left(\sigma\left(v^T h_k(X\ ;\ W)\right) A_i^C\right) + \lambda\|v\|^2\ \lambda > 0\ ;$$

$l_{BCE}$ perte d'entropie croisée binaire, dans lequel $l_{BCE}(p\ y) = -y log p - (1 - y)\log (1 - p)$
$\sigma(x)$ est la fonction sigmoïde, dans lequel $\sigma(x) = 1/1(1 + e^{-x})$ ;
$\theta$ est un vecteur de paramètres du réseau neuronal formé (700, 800, 900) ;
$h_k$ est le vecteur de représentation au niveau de la couche ;
$W$ est le paramètre de la représentation ; et
$f_k(...;\theta)$ est le classificateur appliqué à la couche du réseau neuronal formé (700, 800, 900).

8. Système selon une quelconque revendication précédente, dans lequel l'objectif de pénalité contradictoire est optimisé avec des gradients implicites.

9. Système selon une quelconque revendication précédente, dans lequel la fonction de perte est la somme de la perte en aval de la tâche de classification et de l'objectif de pénalité contradictoire.

10. Système selon une quelconque revendication précédente, dans lequel la fonction de perte est optimisée par descente de gradient stochastique.

11. Procédé mis en œuvre par ordinateur pour retirer un concept d'un réseau neuronal formé (700, 800, 900) pour exécuter une tâche de classification sur un élément de données corrompu d'entrée (100), dans lequel l'élément de données corrompu d'entrée est une image ou une vidéo, et une sortie de la tâche de classification est une classification d'un objet présent dans l'image ou la vidéo, dans lequel le réseau neuronal formé (700, 800, 900) comprend une couche cachée (720, 820), le procédé comprenant :

l'incorporation respective d'une pluralité de classificateurs (10) dans une pluralité de couches de la couche cachée (720, 820), dans lequel :

la couche cachée (720, 820) comprend une pluralité de couches contractantes (860) et respectivement une pluralité de couches précédant les couches contractantes (850), dans lequel la pluralité de couches contractantes (860) présentent des dimensions plus petites que la pluralité de couches précédant les couches contractantes (850) ; et
la pluralité de classificateurs (10) sont respectivement incorporés dans la pluralité de couches précédant les couches contractantes (850) ;

la définition d'un vecteur de représentation au niveau de la pluralité de couches de la couche cachée (720, 820), dans lequel le concept est pertinent pour la tâche de classification et le vecteur de représentation classe les instances du concept et les non-instances du concept au niveau de la couche ;
la définition d'un vecteur d'activation de concept (12), dans lequel le vecteur d'activation de concept (12) est un vecteur normal au vecteur de représentation et le vecteur d'activation de concept (12) comprend un objectif de pénalité contradictoire pour réduire les instances du concept ; et
l'optimisation d'une fonction de perte du réseau neuronal formé (700, 800, 900) en fonction d'une perte en aval de la tâche de classification et de l'objectif de pénalité contradictoire.

12. Procédé mis en œuvre par ordinateur pour former un réseau neuronal (700, 800, 900) au retrait d'un concept du réseau neuronal (700, 800, 900), dans lequel le réseau neuronal (700, 800, 900) est destiné à exécuter une tâche de classification sur un élément de données corrompu d'entrée (100), dans lequel l'élément de données corrompu d'entrée est une image ou une vidéo, et une sortie de la tâche de classification est une classification d'un objet présent dans l'image ou la vidéo, le procédé comprenant :

la formation d'une pluralité de classificateurs (10) pour définir chacun un vecteur de représentation au niveau d'une pluralité respective de couches d'une couche cachée (720, 820) du réseau neuronal (700, 800, 900), dans lequel le concept est pertinent pour la tâche de classification et le vecteur de représentation classant des instances du concept et des non-instances du concept au niveau de la couche, dans lequel la formation du classificateur (10) comprend :

la fourniture d'un ensemble de données de concept (200) à chaque classificateur (10), dans lequel l'ensemble de données de concept (200) comprend des exemples d'instances de classe de concept et des exemples de non-instances de concept ; et
la définition d'un vecteur d'activation de concept (12), basé sur l'ensemble de données de concept (200), dans lequel le vecteur d'activation de concept (12) est un vecteur normal au vecteur de représentation et le vecteur d'activation de concept (12) comprend un objectif de pénalité contradictoire pour réduire les instances du concept au niveau de la couche ;

l'incorporation respective de la pluralité de classificateurs (10) dans une pluralité de couches de la couche cachée (720, 820), dans lequel :

la couche cachée (720, 820) comprend une pluralité de couches contractantes (860) et respectivement une pluralité de couches précédant les couches contractantes (850), dans lequel la pluralité de couches contractantes (860) présentent des dimensions plus petites que la pluralité de couches précédant les couches contractantes (850) ; et
la pluralité de classificateurs (10) sont respectivement incorporés dans la pluralité de couches précédant les couches contractantes (850) .

13. Procédé mis en œuvre par ordinateur selon la revendication 12, dans lequel le procédé comprend en outre l'optimisation d'une fonction de perte du réseau neuronal (700, 800, 900) sur la base d'une perte en aval de la tâche de classification et de l'objectif de pénalité contradictoire.

14. Support de stockage lisible par ordinateur présentant des instructions stockées sur celui-ci, qui, lorsqu'elles sont exécutées par un processeur informatique, amènent le processeur informatique à exécuter le procédé selon l'une quelconque des revendications 11 à 13.

**100**

FIG. 1

**200**

FIG. 2

**10**

LAC

14

$CAV - v_{C,k,\lambda}(W)$

12

Concept separation
hyperplane

16

FIG. 3

**400**

410  420  430  440

LAC

10

FIG. 4

**500**

510     520    530 540

LAC

10

FIG. 5

FIG. 6

**700**

FIG. 7

**800**

FIG. 8

**900**

930

7840

1960

950

950

7840

25088

6272

950

25088

75264

18816

18816

950

75264

18816

950

18816

18816

784

910

10

FIG. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **ABHINAV KUMAR et al.** *Probing Classifiers are Unreliable for concept Removal and Detection*